# EUROPEAN PATENT APPLICATION

(11) **EP 3 672 293 A1**
(43) Date of publication of application: **24.06.2020**
(21) Application number: 18382951.4
(22) Date of filing: 20.12.2018
(51) Int. Cl.: H04W 4/80, H04L 29/08, H04L 29/06

(54) **METHOD OF COMMUNICATION UNDER THE BLE PROTOCOL WITH A SINGLE FORM OF COMMUNICATION**

(71) Applicant: Baintex Technologies, S.L., 46980 Paterna (Valencia) (ES)
(72) Inventor: Esteve Esteve, José Miguel, 46980 Paterna (Valencia) (ES); Escriche Izquierdo, Carlos, 46980 Paterna (Valencia) (ES); Sendra Estrella, Alberto, 46980 Paterna (Valencia) (ES)
(74) Representative: Sahuquillo Huerta, Jesús

(57) **Abstract**

A communication system comprising at server (CS), a proxy device and at least one slave BLE device (S1...Sn) connected with multiple physical devices (D1 ...Dn), the method comprising: (a) initiating communication from the central server (CS) to any BLE device (S1 ...Sn) by sending an encrypted packet encapsulated in a TCP/IP packet through the BLE proxy; (b) converting the TCP/IP packet into a BLE packet in the BLE proxy by referring to the slave device (S1...Sn) defined as the destination in the received TCP/IP packet; and (c) decrypting the BLE packet in the slave BLE device (S1...Sn) receiving the packet sent by the central server (CS) and sending a response packet in encrypted format to the central server (CS) through the BLE proxy that encapsulates it under the TCP/IP protocol to forward it to the central server (CS).

## Description

A purpose of this invention is a method to improve the BLE (Bluetooth Low Energy) protocol. This invention refers to a method of communication that establishes a single format for the entire flow of communication in the BLE network.

### STATE OF THE ART

The BLUETOOTH LOW ENERGY Protocol (hereinafter simply BLE) is the main feature of version 4.0 of the BT (Bluetooth) spec core. This version was introduced in June 2010 by the Bluetooth special interest group (SIG). Despite being based on BT Classic, the BLE protocol is a wireless technology designed to cover purposes not covered by its predecessor. The main purpose of this protocol is to design a radio standard with the least possible energy consumption, especially optimised to have a low cost, with low bandwidth, low power and equally low complexity.

The BLE protocol facilitates short-range communications between devices that do not require large data transfers, with the main idea of providing an efficient technology for monitoring and controlling applications where the amounts of data are typically very low, such as sending sensor values or control messages.

The BLE network topology is star-type. Master devices can have multiple link-layer connections with peripherals (slave devices) and simultaneously perform searches for other devices. On the other hand, a slave role device can only have one link-layer connection with a single master. In addition, a device can send data in *broadcast* mode, advertising events, without waiting for any connection. This allows you to send data to the devices in scanning state without having to establish the master-slave connection.

For the device management, connection and application interface BT's SIG defines a stack of protocols. The BLE protocol stack is divided into three basic parts: Controller, Host and Applications. The controller is the physical device that that allows one to transmit and receive radio signals and to interpret them as data packets. It contains the physical layer, the Direct Test Mode, the Link Layer and the Host Controller Interface.

The host is the software stack that manages while two or more devices communicate with each other. No superior interface is defined for the host; each operating system or environment has its own way of exposing host APIs (Application Programming Interface) for developers. This part of the stack contains a layer of logical link control and adaptation protocol, security manager, attribute protocol, generic attribute profile (GATT) and generic access profile (GAP). For each use case, applications use the software stack, which in turn uses the driver.

Bluetooth Low Energy shares some similarities with classic Bluetooth. Both use a 2.4 GHz band. Classic Bluetooth and BLE use the GFSK to 1Mbps modulation, but with different modulation indices. Enhanced Data Rate (EDR) uses a completely different modulation from GFSK. The classic Bluetooth standard has 79 channels while BLE has 40, as indicated in table 1.1. The separation between channels is also different. Because of these two differences between BLE and classic Bluetooth they are incompatible with each other, so they cannot communicate. However, there are Dual Mode devices that support both technologies by switching the modulation parameters and channels where they are radiating.

These three Advertising channels are strategically located to avoid interference caused by other technologies that coexist in the same spectrum (IEEE 802 and ZigBee). In addition, in connection state, BLE uses the Frequency Hopping Spread Spectrum (FHSS) technique to reduce interference.

BLE uses a Gaussian modulation with frequency displacement. This uses two frequencies to identify the '1' or '0' bit. The Gaussian filter is used to soften transitions between frequencies and to reduce the widening spectrum caused by the ISI. The BLE specification [3] limits the maximum transmitted power to +10 dBm and the minimum to -20 dBm. The minimum received sensitivity required for BLE is -70 dBm, although most BLE devices have a sensitivity of less than -85 dBm.

The link layer is the layer responsible for the states of Advertising, Scanning and creating and maintaining connections. It is also responsible for the structure of the packets. The BLE protocol defines a series of operating modes. So in the Standby mode the device neither transmits nor receives. In general, this state is associated with a sleeper system to conserve energy.

In advertising mode, the device that has the peripheral role enters into a state of advertising in which it sends advertising packets in the advertising channels. In this state it also hears any response (request) of the packets from the central device. This mode is one of the most critical to analyse from a power point of view because the peripheral device will take an Advertising time more or less, depending on the application. It's necessary to consider that the transmission time affects energy consumption; therefore, the Advertising range directly affects the power consumption and the life of the batteries.

Scanning mode refers to listening to Advertising packets sent through its channels. This mode is used to explore devices. In initiating mode, it is the state that the central device enters (master) before switching to connection status. The central device listens to the peripherals Advertising, but once it receives the Advertising of the desired peripheral, the central device must connect by sending the correct data. For the Slave, the state of Advertising also as initial state before the connection state. The connection state is the last state in which the Slave (peripheral) and master (Central) can exchange data. They exchange data periodically through connection events.

So far, the main elements that make up the BLE protocol have been described. Examples of documents that describe some aspects of the BLE protocol are, for example, documents US2018176776, US2018091932, US2017325161, or EP2999297. In none of the documents mentioned and known in the state of the art is a communication protocol established above the BLE protocol that enables a single format for the entire flow of communication, as well as increase security during such communication.

### EXPLANATION OF THE INVENTION

A purpose of this invention is a method of communication that develops a protocol above the BLE protocol. This purpose is achieved with the method of claim 1. In other claims dependent on it, particular or preferred realisations of the invention are described. More specifically, the method of the invention involves generating a packet on a server that is sent through a WLAN or LAN (e.g. Internet) to a Hub or App on a mobile user device. Subsequently, the Hub or App sends the same packet via BLE to the actuator device, which is a device connected to a physical element to be controlled. For example, in home automation, a physical element could be a plug or an appliance. Conversely, the package created by the actuator device reaches the server via the Hub or the App in a single format.

Thus, the Hub or user device that has the App installed are devices that will be called "Proxy BLE" in this descriptive report. "Proxy BLE" devices are responsible for communicating BLE actuator devices to a server, preferably a Web server. Therefore, "proxy BLE" devices are master devices and the actuator devices are slaves within the BLE protocol.

Communication from slave devices to the server is point to point encrypted (AES-CBC). Thus, for the proxies (BLE masters) only the packets received by BLE are resent to the server or the packets received by TCP/IP are resent to the BLE devices. In no event can the packets that are sent from the server to the BLE device or from the device to the server be decrypted, making "man in the middle" (MITM) attacks impossible.

Thanks to the use of proxy-type devices, it is possible to add a WLAN connection to any BLE device without having to change the packet format or add Wi-Fi to all devices, the point to point communication being secure.

Throughout the description and claims the word "comprises" and its variants are not intended to exclude other technical characteristics, additives, components or steps. For experts in the field, other purposes, advantages and features of the invention will be gathered partly from the description and partly from practicing the invention. The following examples and drawings are provided as an illustration and are not intended to restrict this invention. In addition, this invention covers all possible combinations of particular and preferred realisations indicated herein.

### BRIEF DESCRIPTION OF THE FIGURES

Below a series of drawings are briefly described that help to better understand the invention and are explicitly related to a realisation of this invention that is presented as a non-limiting example thereof.
**FIG 1****.** Shows a diagram of the portable electronic device that implements this invention.
**FIG 2****.** Shows the diagram of an architecture of a computer system that illustrates the architecture of a server used in the different practical realisations of the invention.
**FIG 3****.** Shows the diagram of a network architecture that illustrates an illustrative operating environment for the different practical realisations of the invention.
**FIG 4****.** Shows a diagram with the network architecture that illustrates an operating environment of the method that is the subject of this invention.
**FIG 5****.** Shows a scheme of communication on a network under the BLE protocol shown in FIG. 4, according to the communication method object of this invention.
**FIG 6****.** Shows the specific packet format that is implemented in the communication method object of this invention.

### DETAILED EXPLANATION OF ONE MODE OF REALISATION OF THE INVENTION

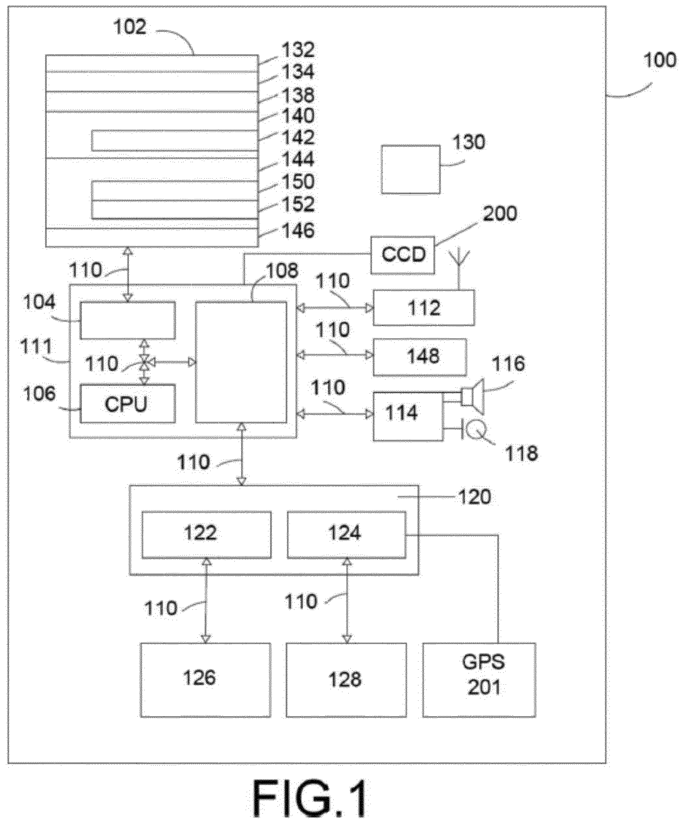

This invention is implemented on a portable electronic device 100 that can be any selected among computers, tablets and mobile phones, although a preferred architecture for a mobile device is shown in figure 1. In general, any programmable communications device can be configured as a device for this invention.

Figure 1 illustrates a portable electronic device, based on certain realisations of the invention. The portable electronic device 100 of the invention includes a memory 102, a memory controller 104, one or more processing units (CPU) 106, a peripheral interface 108, a RF circuit system 112, an audio circuit system 114, a loudspeaker 116, a microphone 118, a subsystem 120 input/output (I/O), a touch screen 126, other input or control devices 128 and an external port 148. These components communicate with each other on one or more communication buses or signal lines 110. The device 100 be any portable electronic device, including, but not limited to, a laptop, a tablet, a mobile phone, a multimedia player, a personal digital assistant (PDA), or similar device, including a combination of two or more of these items. It should be observed that the device 100 is only one example of a portable electronic device 100 and that the device 100 may have more or fewer components than those displayed or a different configuration of components. The different components shown in figure 1 can be deployed in hardware, software, or a combination of both, including one or more integrated circuits of specific application and/or signal processing. Likewise, the screen 126 is defined as touch, although the invention can also be implemented on devices with a standard screen.

The memory 102 may include a high-speed random-access memory and may also include non-volatile memory, such as one or more magnetic disk storage devices, flash memory devices or other non-volatile solid state memory devices. In some realisations, the memory 102 can also include a storage remotely located in relation to one or processors 106, for example a storage connected to a network that is accessed through the RF circuits system 112 or external port 148 and a communications network (not shown) such as the Internet, intranet(s), local area networks (LAN), extended local area networks (WLAN), storage area networks (SAN), and so forth, or any of their appropriate combinations. Access to memory 102 by other components of the device 100, such as the CPU 106 and the peripherals interface 108, can be controlled using the memory controller 104.

The peripherals interface 108 connects the device's input and output peripherals to the CPU 106 and the memory 102. One or more processors 106 run different software programs and/or instruction sets stored in memory 102 to perform the different functions of the device 100 and for data processing.

In some realisations, the peripheral interface 108, the CPU 106, and the memory controller 104 can be deployed on a single chip, such as a chip 111. In certain other realisations they can be implemented on multiple chips.

The RF (radio frequency) circuit system 112 receives and sends electromagnetic waves. The RF circuit system 112 converts electrical signals into electromagnetic waves and vice versa and communicates with communications networks and other communications devices through electromagnetic waves. The RF circuit system 112 can include a widely known circuit system that performs these functions, including but not limited to, an antenna system, an RF transceiver, one or more amplifiers, a tuner, one or more oscillators, a digital signal processor, a CODEC chip set, a Subscriber Identity Module card (SIM), a memory, or any other. The RF circuit system 112 can communicate with networks, such as the Internet, also called World Wide Web (WWW), an Intranet and/or a wireless network, such as a cellular telephone network, a wireless local area network (LAN) and/or a metropolitan area network (MAN) and other devices via wireless communication. Wireless communication can use any of multiple communications standards, protocols and technologies, including, but not limited to, the global system for mobile communication (GSM), the enhanced data GSM environment (EDGE), wideband code division multiple access (W-CDMA), code division multiple access (CDMA), time division multiple access, Bluetooth (particularly Bluetooth 4.0), wireless access (Wi-Fi under, for example, protocols IEEE 802.11a, IEEE 802.11b, IEEE 802.11g and/or IEEE 802.11n), voice protocol over IP (VoIP), Wi-MAX, a protocol for e-mail, instant messaging and/or short message service (SMS) or any other appropriate communication protocol, including communication protocols not yet developed on the date of submission of this document.

The audio circuit system 114, the loudspeaker 116 and the microphone 118 provide an audio interface between a user and the device 100. The audio circuit system 114 receives audio data from the peripherals interface 108, converts the audio data to an electrical signal and transmits the electrical signal to the loudspeaker 116. The loudspeaker converts the electrical signal to sound waves that are audible for human beings. The audio circuit system 114 also receives electrical signals converted by microphone 116 from sound waves. The audio circuits system 114 converts the electrical signal into audio data and transmits the audio data to the peripherals interface 108 for processing. The audio data can be recovered and/or transmitted to the memory 102 and/or the RF circuit system 112 via the peripherals interface 108. In some realisations, the audio circuit system 114 also includes a headphone connection (not shown). The headphone connection provides an interface between the audio circuit system 114 and removable audio input/output peripherals, such as output-only headphones or both output earphones (earphones for one or both ears) and input earphones (microphone).

The I/O subsystem 120 provides the interface between the input/output peripherals of the device 100, such as the touch screen 126 and other input/control devices 128, and the peripheral interface 108. The I/O subsystem 120 includes a touchscreen controller 122 and one or more input controllers 124 for other input or control devices. The input controller (2) 124 receive /send electrical signals to/from other input or control devices 128. The other input/control devices 128 may include physical buttons (e.g. push buttons, toggle buttons, etc.), dials, slide switches, and/or geographic location media 201, such as GPS or equivalent.

The touch screen 126 in this practical realisation provides both an output interface and an input interface between the device and a user. The touch screen controller 122 receives/sends electrical signals to/from touch screen 126. The touch screen 126 displays the user's visual output. The visual output can include text, graphics, video and any combination thereof. Part or all of the visual output can be matched with UI objects, the additional details of which are later described.

The touch screen 126 also accepts user inputs based on haptic or touch contact. The touch screen 126 forms a contact-sensitive surface that accepts the user's inputs. The touch screen 126 and the touch screen controller 122 (along with any of the associated modules and/or sets of memory instructions 102) detects contact (and any movement or loss of contract) on the touch screen 126 and converts the detected contact into interaction with user interface objects, such as one or more programmable keys that are displayed on the touchscreen. In a realisation as an example, a contact point between the touch screen 126 and the user corresponds to one or more of the user's fingers. The touch screen 126 can use LCD technology (liquid crystal display) technology or LPD (light-emitting polymer display) technology, although other display technologies can be used in other realizations. The touch screen 126 and the touch screen controller 122 can detect contact and any movement or lack of it using any of multiple contact sensitivity technologies, including but not limited to, capacitive, resistive, infrared and surface acoustic wave technologies, as well as other proximity sensor provisions or other elements to determine one or more contact points with the touch screen 126.

The device 100 also includes a power supply system 130 to power the different components. The power supply system 130 can include an energy management system, one or more power supplies (e.g. batteries, AC), a rechargeable system, a power failure detection circuit, an energy converter or inverter, an energy state indicator (for example, a light-emitting diode (LED)) and any other component associated with power generation, management, and distribution on portable devices.

In some realisations, the software components include an operating system 132, a communication module 134 (or instruction set), a contact/motion module 138 (or instruction set), a graphic module 140 (or instruction set), module144 (or instruction set) of the state of the user interface and one or more applications 146 (or instruction sets).

The operating system 132 (e.g. iOS, RTXC, LINUX, UNIX, OS X, WINDOWS, or an embedded operating system), includes different software components and/or controllers to control and manage general system tasks (e.g. memory management, storage device control, energy management, etc.) and facilitate communication between the different hardware and software components.

The communication module 134 facilitates communication with other devices through one or more external ports 148 and also includes different software components to manage the data received by the RF circuit system 112 and/or external port 148. The external port 148 (e.g. Universal Serial Bus (USB), FIREWIRE, etc.) is adapted to connect directly to other devices or indirectly over a network (e.g., Internet, wireless LAN, etc.).

The contact/motion module 138 detects contact with the touch screen 126, along with the touch screen controller 122. The contact/motion module 138 includes different software components to perform different operations related to detecting contact with the touch screen 126, such as determining whether the contact has occurred, determining whether there is movement of the contact and keep track of the movement through the touch screen, and determine if the contact has been interrupted (i.e. if the contact has stopped). The determination of the contact point movement may include determining the speed (magnitude), velocity (magnitude and direction) and/or acceleration (including magnitude and/or direction) of the point of contact. In some realisations, the contact/motion module 126 and the touch screen controller 122 also detect contact on the touch pad.

The graphic module 140 includes different known software components to show and display graphics on the touch screen 126. Note that the term "graphics" includes any object that may be shown to a user, including but not limited to text, web pages, icons (such as user interface objects that include programmable keys), digital images, videos, animations and the like.

In some realisations, the graphic module 140 includes an optical intensity module 142. The optical-Intensity module 142 controls the optical intensity of graphical objects, such as UI objects, shown in the touch screen 126. Optical intensity control may include increasing or decreasing the optical intensity of a graphic object. In some realisations, the increase or decrease can follow predetermined functions.

The user interface status module 144 controls the status of the device's user interface 100. The user interface status 144 can include a locking module 150 and an unlocking module 152. The block module detects the satisfaction of any one or more conditions to transition the device 100 to a locked state in the user interface and transition the device 100 to the locked state. The unlock module detects whether any one or more conditions are met to transition the device 100 to a locked state in the user interface and transition the device 100 to the locked state.

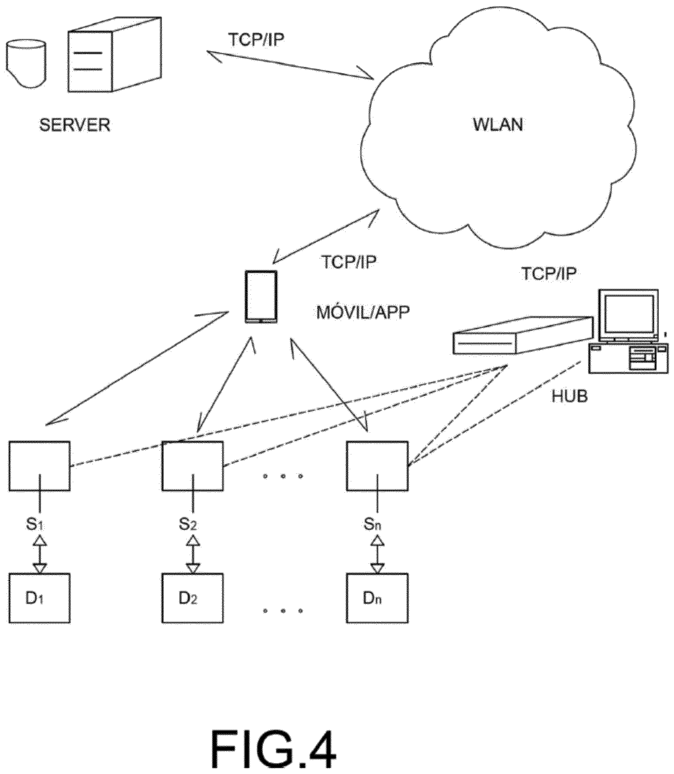

The application(s) 130 may include any application installed on the device 100, including, but not limited to, a browser, address book, contact list, email, instant messaging, word processing, keyboard emulation, graphical objects, JAVA applications, encryption, digital rights management, voice recognition, voice replication, position determination capability (such as that provided by the global positioning system (GPS)), a music player (which plays recorded music stored on one or more files, such as MP3 or AAC files), or any other, including the application object of the invention, as detailed in reference to figure 4 and those that follow.

In some realisations, the device 100 may include one or more optional optical sensors (not shown), such as CMOS or CCD 200 image sensors for use in imaging applications.

However, the hardware structure indicated is one of those that are possible, and it should be noted that the device 100 can include other image capture elements such as camera, scanner, laser plotter or the combination of any of these types of devices, which can provide the mobile device with the representation of the real environment in video format, image sequence, vector format or any type of combination of the aforementioned formats.

Similarly, the device 100 may include geographic location devices based on GPS positioning satellite networks, geographic location assist devices based on GPS satellite networks and network IP localisation of Internet -AGPS-, geographic localisation devices based on the triangulation of radio signals provided by WIFI antennas and Bluetooth® devices (ISSP), the combination of any of these devices mentioned or any type of device that will provide the mobile device with numerical data about its geographical location.

The device 100 can include any type of element capable of representing real-time images with a minimum of 24 FPS (frames per second) such as TFT, TFT-LED, TFT-OLED, TFT-Retina, the combination of any of the previous ones, in addition to new generation Holo-TFT screens, transparent and micro-projectors or any graphic representation device that can provide the mobile device 100 a way to represent visual content to the user.

The device 100 includes a processor or set of processors that by themselves or in combination with graphics processors such as GPU (Graphics Processing Unit) or APU (Accelerated Processing Unit) can provide the mobile device 100 with the ability to represent, in real runtime, vector graphics and shape texturized polygons with these via vector representation libraries (standardised procedure sets of graphical representation for different platforms)like OpenGL, DirectX or any type of libraries used for this purpose.

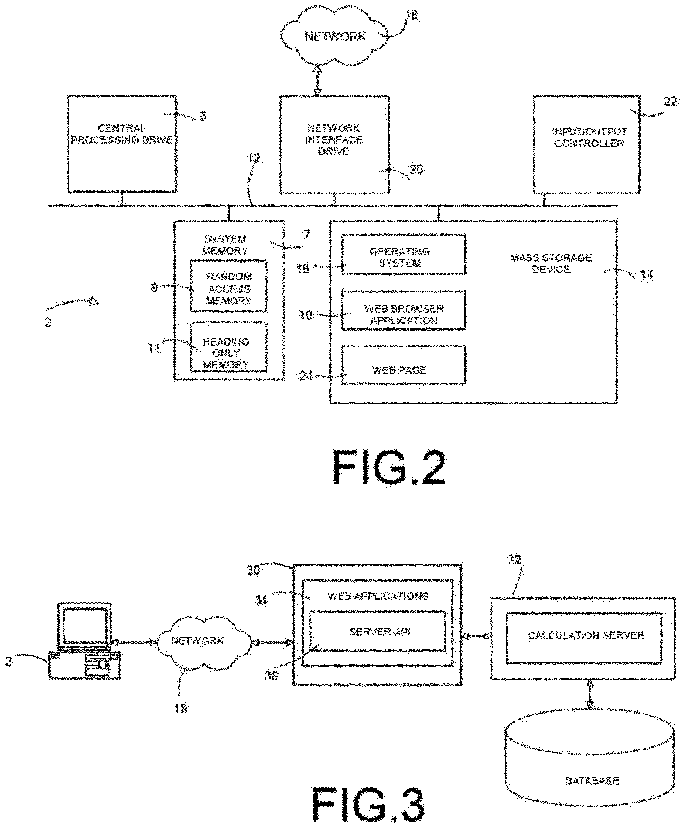

Figures 2 and 3 and the corresponding description are intended to provide a brief, general description of an appropriate computing environment (a server and a personal computer) in which the forms of realizing the invention can be implemented. Although the invention will be described within the general context of program modules running on server computer systems and mobile devices 100, experts in the field may notice that the invention can also be implemented in combination with other types of computer systems and program modules.

Generally speaking, program modules include routines, programs, components, data structures, and other types of structures that perform specific tasks or implement specific abstract data types. The invention can also be put into practice in distributed computing environments where the tasks are carried out through remote processing devices that are linked through a communications network. In a distributed computing environment, program modules can be located on both local devices and remote memory storage devices.

With reference to figure 2 now, an illustrative computer architecture will be described for a computer 2 used in the various forms of realisation of the invention. The computer architecture, shown in Figure 2, illustrates a conventional desktop or notebook computer and can also be used as a server, which includes a central processing unit (CPU) 5, a memory system 7, which includes a random-access memory (RAM) 9 and a read-only memory (ROM) 11, and a bus 12 from the system that attaches memory to CPU 5. A basic input / output system that contains the basic routines that help to transfer information between the elements located on the computer, during start-up for example, is stored in the ROM 11. The computer 2 also includes a mass storage device 14 to store an operating system 16, application programs, and other program modules, which will be described in more detail in the following lines.

The mass storage device 14 is connected to the CPU 5 using a mass storage driver (not shown) connected to the bus 12. The mass storage device 14 and its associated computer-readable media provide non-volatile storage to the computer 2. Although the description of the computer-readable media contained in this report refers to a mass storage device, such as a hard disk or a CD-ROM drive, the experts in the field will know that computer-readable media can be any means that can be accessed on a computer 2.

To give just one example, computer-readable media can understand some computer storage media and some media outlets. Computer storage media include volatile and non-volatile, removable and non-removable media implemented in any storage procedure or technique, such as computer-readable instructions, data structures, program modules, or other data. Computer storage media include, but are not limited to, RAM, ROM, EPROM, EEPROM, flash memory or other solid state memory techniques, CD-ROMs, versatile digital Disks (DVDs) or other optical storage devices, magnetic cassettes, magnetic tapes, storage devices of magnetic discs or other magnetic storage devices or any other means which can be used to store the desired information and which can be accessed using a computer 2.

According to various forms of realisation of the invention, the computer 2 can operate in a networked connection environment using logical connections with remote computers via a network 18, such as the Internet. The computer 2 can connect to the network 18 through an interface unit 20 with the network connected to the bus 12. It should be pointed out that the network interface 20 can also be used to connect with other types of networks and remote computer systems. The computer 2 can also include an input / output controller 22 for receiving and processing an input from multiple other devices, including a keyboard and an electronic punch (not shown in figure 2). Similarly, an in / out controller 22 can provide an output to a display screen, printer, or other output device type.

As briefly stated above, multiple program modules and data files can be stored in the mass storage device 14 and on the computer 2 RAM 9, including an appropriate operating system 16 for monitoring the operation of the personal computer connected to the network, such as the WINDOWS® operating system by MICROSOFT CORPORATION®, Mac OS X, Linux or Unix. The mass storage device 14 and RAM 9 can also store one or more program modules. In particular, the mass storage device 14 and RAM 9 can store a program 10 of a web browser application. As experts in the matter well know, the web browser application program 10 is operative to request, receive, reproduce and provide interactivity with electronic documents, such as a web page 24 that has been formatted using HTML. Also, the web browser application 10 program can be operative to execute directives contained in the web page 24, for example directives that use the JAVASCRIPT language by SUN MICROSYSTEMS, INC. According to one form of realisation of the invention, the web browser application program 10 comprises the web browser application program INTERNET EXPLORER by the MICROSOFT CORPORATION. It should be noted, however, that other web browser application programs from other manufacturers can be used to materialise the various aspects of the invention herein, such as the FIREFOX web browser application by MOZILLA.

In particular, the web page 24 can include an HTML and directives which, when represented by application 10 of the web browser, provide a visual representation of a program or programs stored in the computer 2 acting as server 30. Likewise, the directives included in the web page 24 make it possible for a computer user to interact with the representation provided by the web browser application 10 and modify the application 10.

With reference to Figure 3, a diagram of a network architecture illustrating an operating environment will be described for the various forms of realisation of the invention. As shown in figure 3, the computer 2 is connected to a network 18. There is also an applications server 30 connected to the network 18. The applications server 30 comprises a computer of the server which may contain any or all of the conventional computer components described previously in relation to figure 1. Also, the application server 30 is operating to run a web server application to receive and respond to requests related to documents stored in or accessible to the applications server 30. Also, the application server 30 is operational to receive and respond to requests related to the pages generated by a web application 34. It should be noted that the web application 34 can understand an executable code in the application server 30, executable code to communicate with other computers, and can include templates, graphics, audio files and other contents known by the experts in the field.

According to another aspect of the invention the web application 34 is operational to provide an interface with a computer user 2 to interact with the program or programs object of this invention and accessible through the network 18. In particular, the web application 34 uses an application programming interface (API) 38 of the server.

As will be discussed in more detail below, the computer 2 can transmit a request to the applications server 30 to display the work interface of the invention within the context of the application 10 of the web browser. In response to this request, the web application 34 communicates with a server 32 of calculation using the API 38 of the server.

In reference to figure 4, the system implementing the method of this invention comprises a central server (CS) (i.e. a computer 2, as described in reference to figures 2 and 3), multiple "proxy BLE" devices that can be portable electronic devices 100, as described in reference to figure 1, or a Hub-type electronic device, which may be a computer 2 according to figures 2 and 3, where such proxy devices are configured in a network under the BLE protocol as *masters* of multiple slaves (S1...Sn) connected with multiple physical devices (D1 ...Dn), where each slave device (S1...Sn) is connected to a physical device (D1...Dn).

On the other hand, *slave* device (S1...Sn) is defined as any device within a particular location that comprises or integrates a processor and a memory that stores a program or programs that include multiple instructions that, when executed by the processor, make the slave device (S1...Sn) respond to a given instruction received from a proxy device (portable electronic device 100 or Hub) paired using BLE with that slave device (S1...Sn) connected in turn to a certain physical device (D1...Dn).

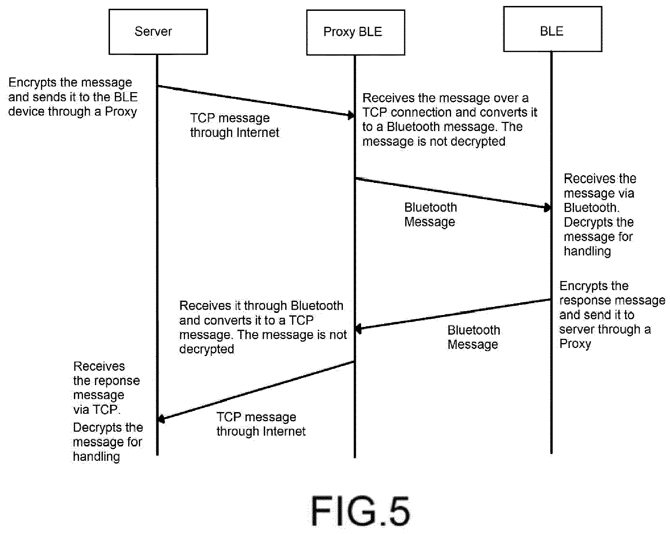

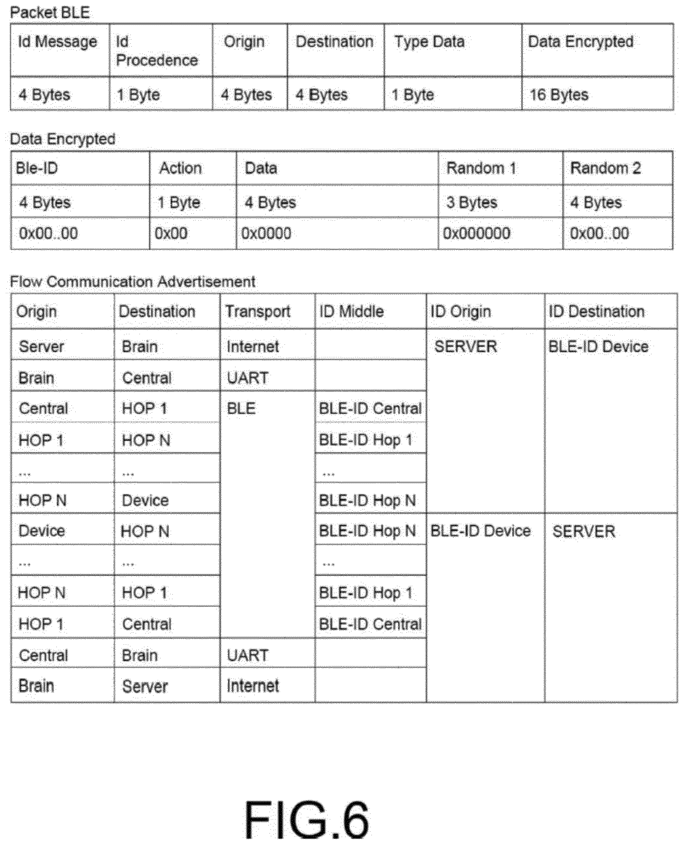

Figure 5 shows the diagram of communication between the central server (SC) and proxy devices (100, Hub). The central server (CS) initiates communication with any BLE device (S1...Sn) connected one to one with its respective physical device (D1...Dn) with a specific packet format shown in figure 6, as well as the flow that these packets follow. This packet is encrypted on the CS server itself, encapsulated in a TCP/IP packet and sent to a proxy (100, Hub). The proxy converts the format of the packets to a format that is supported by the BLET protocol and sends it to the target BLE devices, i.e. to the recipient slaves (S1...Sn). These devices receive the message and decrypt it, sending a response packet passing again through the BLE proxy.

## Claims

1. A method implemented by a communication computer under the BLE protocol that comprises at least one central server (CS), a proxy device and at least one BLE device, in such a way that the BLE proxy is configured as master of a BLE network and the BLE devices are set up as slaves in the BLE network (S1...Sn) connected to multiple physical devices (D1...Dn), where each slave device (S1...Sn) is connected to a physical device (D1...Dn) and which is **characterised** for comprising the stages of: **(a)** initiating communication from the central server (CS) to any BLE device (S1...Sn) connected to a physical device (D1...DN) by sending an encrypted packet encapsulated in a TCP/IP packet through the BLE proxy; **(b)** Convert the TCP/IP packet into an BLE packet in the BLE proxy by referring to the slave device (S1...Sn) defined as target in the TCP/IP packet received; and **(c)** decrypt the BLE packet in the slave BLE device (S1 ...Sn) receiving the packet sent by the central server (CS) and send a response packet in encrypted format to the central server (CS) through the BLE proxy that encapsulates it under the TCP/IP protocol to forward it to the central server (CS).

2. The method according to claim 1 where all packets are encrypted with AES-CBC.
